# EUROPEAN PATENT SPECIFICATION

(11) **EP 3 476 795 B1**
(45) Date of publication and mention of the grant of the patent: **02.08.2023**
(21) Application number: 17820125.7
(22) Date of filing: 27.06.2017
(51) Int. Cl.: B66F 19/00, A61H 3/00, B66D 3/18, B25J 9/00

(54) **ASSIST SUIT**
UNTERSTÜTZUNGSANZUG
VÊTEMENT D'ASSISTANCE

(30) Priority: 28.06.2016 JP 2016127403; 28.06.2016 JP 2016127703
(43) Date of publication of application: 01.05.2019
(73) Proprietor: Kubota Corporation, Osaka-shi, Osaka 556-8601 (JP)
(72) Inventor: SAKANO Tomoyoshi, Sakai-shi Osaka 590-0823 (JP); HAYASHI Masahiko, Sakai-shi Osaka 590-0823 (JP); NAKATSUKA Masaki, Sakai-shi Osaka 590-0823 (JP); NISHIDA Keisuke, Sakai-shi Osaka 590-0823 (JP); HASHIMOTO Ryo, Sakai-shi Osaka 590-0823 (JP)
(74) Representative: Cabinet Beau de Loménie
(86) International application number: PCT/JP2017/023498
(87) International publication number: WO 2018/003771

(56) References cited:
- JP-A- 2009 284 919
- JP-A- 2014 090 799
- JP-A- 2015 139 666
- JP-A- 2015 164 451
- JP-B2- 3 390 414
- JP-B2- 4 315 766
- JP-B2- 5 002 655
- JP-B2- 5 283 401
- JP-B2- 5 456 635
- JP-B2- 5 909 063
- JP-B2- 5 909 063
- JP-U- S53 124 210
- US-A1- 2015 335 515

## Description

### Technical Field

The present invention relates to an assist suit that is used fitted to a worker, and assists movement of the worker.

### Background Art

As the sort of assist suit mentioned above, for example, an assist suit described in Patent Document 1 is already known. The assist suit described in Patent Document 1 includes a body portion fitted to the back of a worker, and a waist belt (an "attachment belt" in Patent Document 1) that extends from the body portion and is wound around the waist of the worker to fit the body portion to the worker.

Also, the assist suit described in Patent Document 1 has arm portions ("upper arm portions" in Patent Document 1) that extend to the front side from the body portion through an area above the worker, hand portions suspended from tip end portions of the arm portions through winch wires ("wires" in Patent Document 1) and serving as handles for the worker in a state where the hand portions have been attached to an object to be lifted, and a winch device (a "drive device" in Patent Document 1) capable of winding and unwinding the winch wires.

Also, the assist suit described in Patent Document 1 is provided with a leg assist device (a "leg action portion" in Patent Document 1) that extends to the front side from the body portion through areas beside the worker, and assists the worker in a standing movement by exerting a pushing action on a thigh of the worker from the front side.

Also, for example, in a case where the worker crouches to lift up a package on the floor, according to the above configuration, a standing movement and a movement to lift the package are assisted by the assist suit.

Also, as the sort of assist suit mentioned above, for example, an assist suit described in Patent Document 2 (a "power assist suit" in that document) is already known. The power assist suit described in Patent Document 2 includes lower leg parts that can be fitted to lower limbs, and upper limb parts that can be fitted to upper limbs. Besides, JP 5 909 063 discloses a power assist robotic device assisting the movement of a wearer and JP 5 002 655 discloses a wearable motion assist device.

### Prior Art Documents

### Patent Documents

Patent Document 1: JP 2015-182832A
Patent Document 2: JP 2015-47313A

### Disclosure of the Invention

### Problem to be Solved by the Invention

In the assist suit described in Patent Document 1, when the worker winds the waist belt around their own waist, the waist belt may be wound at a position higher or lower than the height assumed by the designer. In that case, the positions of the hand portions and the leg assist device also are at a position higher or lower than the height assumed by the designer. As a result, the worker may feel uncomfortable about the positions of the hand portions and the leg assist device, or movement may be insufficiently assisted.

In view of the above problems, there are demands for an assist suit that allows a situation where a worker feels uncomfortable about the positions of the hand portions and the leg assist device, or a situation where a movement is insufficiently assisted, to easily be avoided.

Also, in the assist suit described in Patent Document 2, a manually operated operation portion (an "operation switch" in that document) is positioned on the back of the worker in an upper limb part, so in a state where the worker is wearing the assist suit, it is difficult for the worker to reach the operation portion with their hand, and therefore it is not easy to manually operate the operation portion.

In view of the above circumstances, there are demands for an assist suit in which an operation portion can easily be manually operated.

### Means for Solving Problem

In a characteristic configuration, the present invention includes:
a body portion to be fitted to the back of a worker;
a waist belt that extends from the body portion and is wound around the waist of the worker to fit the body portion to the worker;
an arm portion that extends to a front side from the body portion through an area above the worker;
a hand portion suspended from a tip end portion of the arm portion through a winch wire, and serving as a handle for the worker in a state where the hand portion has been attached to an object to be lifted;
a winch device capable of winding and unwinding the winch wire; and
a leg assist device that extends to the front side from the body portion through an area beside the worker, and assists the worker in a standing movement by exerting a pushing action on a thigh of the worker from the front side;
wherein a back surface contact portion of the waist belt that contacts the back surface of the worker is provided with a positioning mechanism that prescribes the position where the waist belt is wound.

According to the present invention, due to the positioning mechanism provided in the back surface contact portion, the height where the waist belt is wound easily matches the height assumed by the designer. That is, the positions of the hand portion and the leg assist device also easily match the height assumed by the designer.

Therefore, according to the present invention, a situation where a worker feels uncomfortable about the positions of the hand portion and the leg assist device, or a situation where a movement is insufficiently assisted, are easily avoided.

Further, in the present invention, the positioning mechanism is a recessed portion that is recessed in a belt thickness direction formed from an intermediate portion to a lower end portion in a vertical direction of the back surface contact portion.

According to this configuration, the worker can obtain a feeling of good fit in a state with the recessed portion contacting the worker's buttocks and a portion on the upper side relative to the recessed portion contacting the worker's waist. As a result, according to this configuration, the worker easily winds the waist belt at a height where the recessed portion contacts the buttocks and the portion on the upper side relative to the recessed portion contacts the waist. Therefore, the recessed portion functions as a positioning mechanism.

Therefore, according to the above configuration, a positioning mechanism can be provided by a simple configuration in which merely the recessed portion is provided.

Further, in the present invention, it is preferable that a stepped portion is formed between the recessed portion in the back surface contact portion and a portion on an upper side relative to the recessed portion.

The weight of a package and the assist suit are mainly applied to the waist belt. Therefore, it is assumed that the height of the waist belt gradually drops during work.

Here, according to the above configuration, the stepped portion catches on the upper portion of the buttocks of the worker. Therefore, it is difficult for the height of the waist belt to drop during work.

Further, in the present invention, it is preferable that the leg assist device has an operation arm supported by the body portion in a state capable of swinging in the vertical direction, and a leg holding portion supported by the operation arm and fitted to a thigh of the worker, and is configured such that by causing the operation arm to swing in the vertical direction, the leg assist device acts on the thigh of the worker through the leg holding portion, and
in a state where the body portion and the leg holding portion have been fitted to the worker, a pivot axis of the operation arm is positioned at the same height as the stepped portion or lower than the stepped portion.

In a state where the waist belt has been wound at the height prescribed by the recessed portion, the vertical swinging center (hip joint) of the thigh of the worker is easily positioned at the same height as the stepped portion or lower than the stepped portion. Furthermore, according to the above configuration, the pivot axis of the operation arm is also positioned at the same height as the stepped portion or lower than the stepped portion.

That is, according to the above configuration, the height of the pivot axis of the operation arm easily becomes the same as the height of the vertical swinging center of the thigh of the worker. Also, in a case where the height of the pivot axis of the operation arm is the same as the vertical swinging center of the thigh of the worker, the leg assist device can act favorably on the thigh of the worker.

Therefore, according to the above configuration, the leg assist device easily acts favorably on the thigh of the worker.

Further, in the present invention, it is preferable that in a state where the body portion and the leg holding portion have been fitted to the worker, the pivot axis is positioned higher than a lower end portion of the waist belt.

In a state where the waist belt has been wound at the height prescribed by the recessed portion, the vertical swinging center (hip joint) of the thigh of the worker is easily positioned higher than the lower end portion of the waist belt. Furthermore, according to the above configuration, the pivot axis of the operation arm is also positioned higher than the lower end portion of the waist belt.

That is, according to the above configuration, the height of the pivot axis of the operation arm easily becomes the same as the height of the vertical swinging center of the thigh of the worker. Also, in a case where the height of the pivot axis of the operation arm is the same as the vertical swinging center of the thigh of the worker, the leg assist device can act favorably on the thigh of the worker.

Therefore, according to the above configuration, the leg assist device easily acts favorably on the thigh of the worker.

Further, in the present invention, it is preferable that the positioning mechanism is formed spanning across left and right ends of the back surface contact portion.

According to this configuration, for example, a wide and stable positioning mechanism is more easily formed than in a case where a positioning mechanism is formed only at the left or right end portion of the back surface contact portion.

Further, in the present invention, it is preferable that a left-right pair of shoulder belts hooked over both shoulders of the worker are provided;
wherein upper side end portions of the left-right pair of shoulder belts are supported by an upper side portion of the body portion,
lower side end portions of the left-right pair of shoulder belts are supported by a lower side portion of the body portion, and
an interval between the upper side end portions in the left-right pair of shoulder belts is narrower than an interval between the lower side end portions in the left-right pair of shoulder belts.

In a state where the left-right pair of shoulder belts have been hooked over both shoulders of the worker, as the interval between the worker's neck and the left-right pair of shoulder belts increases, the shoulder belts can shift more to the left or right. When the shoulder belts shift greatly to the left or right, inconveniences such as the body portion tilting greatly or the shoulder belts separating from the shoulders of the worker may occur.

Here, according to the above configuration, in a state where the left-right pair of shoulder belts have been hooked over both shoulders of the worker, the interval between the worker's neck and the left-right pair of shoulder belts is comparatively small. Therefore, the width in which the shoulder belts can shift to the left or right is small. Accordingly, it is unlikely that inconveniences such as the body portion tilting greatly or the shoulder belts separating from the shoulders of the worker will occur.

Further, in the present invention, it is preferable that the upper side end portions of the left-right pair of shoulder belts are supported by a center portion in a left-right direction of the body portion, and
the lower side end portions of the left-right pair of shoulder belts are supported by left and right end portions of the body portion.

According to this configuration, the upper side end portions of the left-right pair of shoulder belts are supported by the center portion in the left-right direction of the body portion, so in a state where the left-right pair of shoulder belts have been hooked over both shoulders of the worker, the interval between the worker's neck and the left-right pair of shoulder belts is particularly small. Accordingly, it is particularly unlikely that inconveniences such as the body portion tilting greatly or the shoulder belts separating from the shoulders of the worker will occur.

Moreover, because the lower side end portions of the left-right pair of shoulder belts are supported by the left and right end portions of the body portion, the interval between the left-right pair of shoulder belts increases in the downward direction. Therefore, the worker can easily pass both arms through the left-right pair of shoulder belts. Also, the worker can easily hook the left-right pair of shoulder belts over both shoulders.

In a characteristic configuration, an assist suit according to a non-claimed example comprises:
a body portion to be fitted to the back of a worker; and
a leg assist device that extends to a front side from the body portion through an area beside the worker, and assists the worker in a standing movement by exerting a pushing action on a thigh of the worker;
wherein a manually operated operation portion is disposed in a portion positioned beside the worker in the leg assist device.

According to this configuration, the operation portion is positioned beside the worker, so in a state where the worker is wearing the assist suit, it is easy for the worker to reach the operation portion with their hand, and therefore it is easy to manually operate the operation portion.

Further, in the present example, it is preferable that a left-right pair of the leg assist devices are provided;
wherein a first operation portion is disposed as the operation portion in a portion positioned beside the worker in a right side leg assist device among the left-right pair of leg assist devices, and
a second operation portion is disposed as the operation portion in a portion positioned beside the worker in a left side leg assist device among the left-right pair of leg assist devices.

According to this configuration, the first operation portion is positioned to the right side of the worker and the second operation portion is positioned to the left side of the worker. Here, if the first operation portion is adopted as an operation portion having a comparatively high frequency of use and the second operation portion is adopted as an operation portion having a comparatively low frequency of use, it is possible to realize a layout suitable for a right-handed worker.

Further, in the present example, it is preferable that the operation portion is a power operation portion that switches main power on or off.

According to this configuration, the power operation portion, which has a comparatively high frequency of use, is positioned beside the worker, so in a state where the worker is wearing the assist suit, it is easy for the worker to reach the power operation portion with their hand, and therefore it is easy to manually operate the power operation portion.

Further, in the present example, it is preferable that there are provided:
a leg assist upper/lower limit value setting portion that sets a leg assist upper limit value that is an upper limit value of an operation range of the leg assist device, and a leg assist lower limit value that is a lower limit value of the operation range of the leg assist device; and
a manually operated leg assist change command operation portion that commands the leg assist upper/lower limit value setting portion to change the leg assist upper limit value and the leg assist lower limit value.

According to this configuration, it is possible for the worker to change the leg assist upper limit value and the leg assist lower limit value according to their own body type or working manner.

Further, in the present example, it is preferable that when the worker manually operates the leg assist change command operation portion in a state where the worker has operated the leg assist device to an arbitrary operation position, the leg assist upper/lower limit value setting portion sets the operation position of the leg assist device at the time when the leg assist change command operation portion was manually operated to the leg assist upper limit value or the leg assist lower limit value.

According to this configuration, the operation position of the leg assist device is set to the leg assist upper limit value or the leg assist lower limit value after the worker actually operates the leg assist device and confirms that operation position, so it is possible for the worker to easily change the leg assist upper limit value or the leg assist lower limit value according to their own body type or working manner.

Further, in the present example, it is preferable that an area on an upper limit side in the operation range of the leg assist device is represented as a leg assist upper limit side area, and an area on a lower limit side in the operation range of the leg assist device is represented as a leg assist lower limit side area, and
the leg assist upper/lower limit value setting portion,
if the operation position of the leg assist device belongs to the leg assist upper limit side area, sets the operation position of the leg assist device at the time when the leg assist change command operation portion was manually operated to the leg assist upper limit value, and
if the operation position of the leg assist device belongs to the leg assist lower limit side area, sets the operation position of the leg assist device at the time when the leg assist change command operation portion was manually operated to the leg assist lower limit value.

According to this configuration, when the worker manually operates the leg assist change command operation portion in a state where the worker has operated the leg assist device to an arbitrary operation position, the leg assist upper/lower limit value setting portion automatically judges whether the operation position of the leg assist device at the time when the leg assist change command operation portion was manually operated should be set to the leg assist upper limit value or to the leg assist lower limit value, and then sets the operation position of the leg assist device at the time when the leg assist change command operation portion was manually operated to the leg assist upper limit value or the leg assist lower limit value. As a result, it is possible to easily change the leg assist upper limit value or the leg assist lower limit value, without the nuisance of the worker judging whether the operation position of the leg assist device at the time when the leg assist change command operation portion was manually operated should be set to the leg assist upper limit value or to the leg assist lower limit value.

Further, in the present example, it is preferable that there are provided:
an arm portion that extends to a front side from the body portion through an area above the worker;
a hand portion suspended from a tip end portion of the arm portion through a winch wire, and serving as a handle for the worker in a state where the hand portion has been attached to an object to be lifted;
a winch device capable of winding and unwinding the winch wire;
a winch assist upper/lower limit value setting portion that sets a winch assist upper limit value that is an upper limit value of an operation range of the winch device, and a winch assist lower limit value that is a lower limit value of the operation range of the winch device; and
a manually operated winch assist change command operation portion that commands the winch assist upper/lower limit value setting portion to change the winch assist upper limit value and the winch assist lower limit value.

According to this configuration, it is possible for the worker to change the winch assist upper limit value and the winch assist lower limit value according to their own body type or working manner.

Further, in the present example, it is preferable that when the worker manually operates the winch assist change command operation portion in a state where the worker has operated the winch device to an arbitrary operation position, the winch assist upper/lower limit value setting portion sets the operation position of the winch device at the time when the winch assist change command operation portion was manually operated to the winch assist upper limit value or the winch assist lower limit value.

According to this configuration, the operation position of the winch device is set to the winch assist upper limit value or the winch assist lower limit value after the worker actually operates the winch device and confirms that operation position, so it is possible for the worker to easily change the winch assist upper limit value or the winch assist lower limit value according to their own body type or working manner.

Further, in the present example, it is preferable that an area on an upper limit side in the operation range of the winch device is represented as a winch assist upper limit side area, and an area on a lower limit side in the operation range of the winch device is represented as a winch assist lower limit side area, and
the winch assist upper/lower limit value setting portion,
if the operation position of the winch device belongs to the winch assist upper limit side area, sets the operation position of the winch device at the time when the winch assist change command operation portion was manually operated to the winch assist upper limit value, and
if the operation position of the winch device belongs to the winch assist lower limit side area, sets the operation position of the winch device at the time when the winch assist change command operation portion was manually operated to the winch assist lower limit value.

According to this configuration, when the worker manually operates the winch assist change command operation portion in a state where the worker has operated the winch device to an arbitrary operation position, the winch assist upper/lower limit value setting portion automatically judges whether the operation position of the winch device at the time when the winch assist change command operation portion was manually operated should be set to the winch assist upper limit value or to the winch assist lower limit value, and then sets the operation position of the winch device at the time when the winch assist change command operation portion was manually operated to the winch assist upper limit value or the winch assist lower limit value. As a result, it is possible to easily change the winch assist upper limit value or the winch assist lower limit value, without the nuisance of the worker judging whether the operation position of the winch device at the time when the winch assist change command operation portion was manually operated should be set to the winch assist upper limit value or to the winch assist lower limit value.

### Brief Description of the Drawings

FIG. 1 is a perspective view showing the overall configuration of an assist suit according to a first embodiment.
FIG. 2 is a front view showing the overall configuration of an assist suit according to a first embodiment.
FIG. 3 is a side view showing a state where a worker is wearing an assist suit according to a first embodiment.
FIG. 4 is a rear view showing a state where a worker is wearing an assist suit according to a first embodiment.
FIG. 5 is a longitudinal cross-sectional view showing the structure of a back surface contact portion according to a first embodiment.
FIG. 6 is a right side view showing a state where a worker is wearing an assist suit according to a second embodiment.
FIG. 7 is a rear view showing a state where a worker is wearing an assist suit according to a second embodiment.
FIG. 8 is a plan view showing an assist suit according to a second embodiment.
FIG. 9 is a diagram showing control blocks according to a second embodiment.
FIG. 10 is a diagram showing a control flow relating to a leg assist upper/lower limit value change mode and a winch assist upper/lower limit value change mode according to a second embodiment.
FIG. 11 is a diagram showing a control flow relating to a leg assist upper/lower limit value change mode according to a second embodiment.
FIG. 12 is a diagram showing a control flow relating to a winch assist upper/lower limit value change mode according to a second embodiment.

### Best Mode for Carrying out the Invention

### (First Embodiment)

An embodiment for carrying out the present invention will be described with reference to the drawings. Note that in the following description, the front-rear direction, the left-right direction, and the up-down direction are described as follows. That is, in a state where the worker is wearing an assist suit 1, viewed from the perspective of the worker, the front side is "front", the rear side is "rear", the right side is "right", the left side is "left", the upper side is "upper", and the lower side is "lower".

### Overall Configuration of Assist Suit

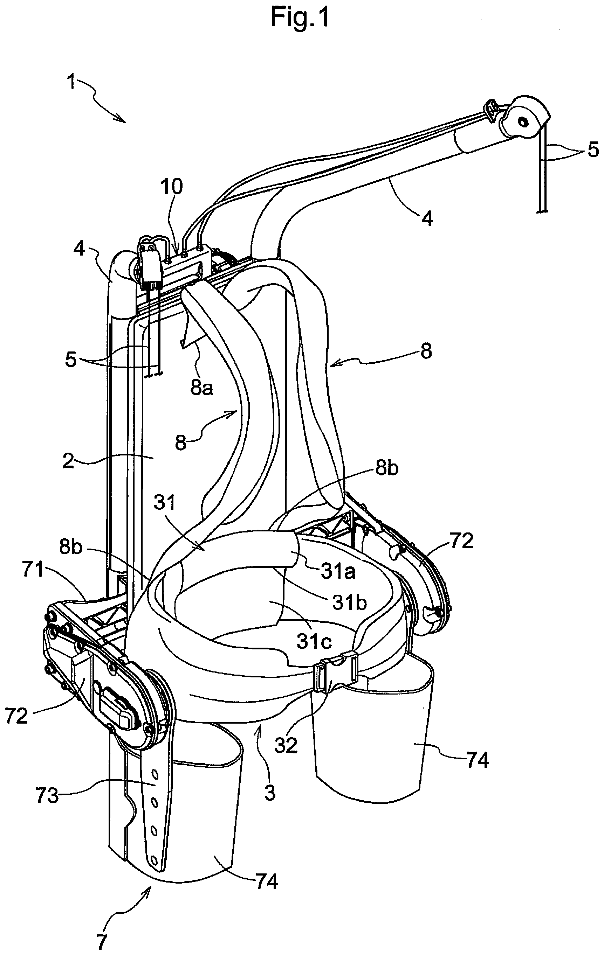

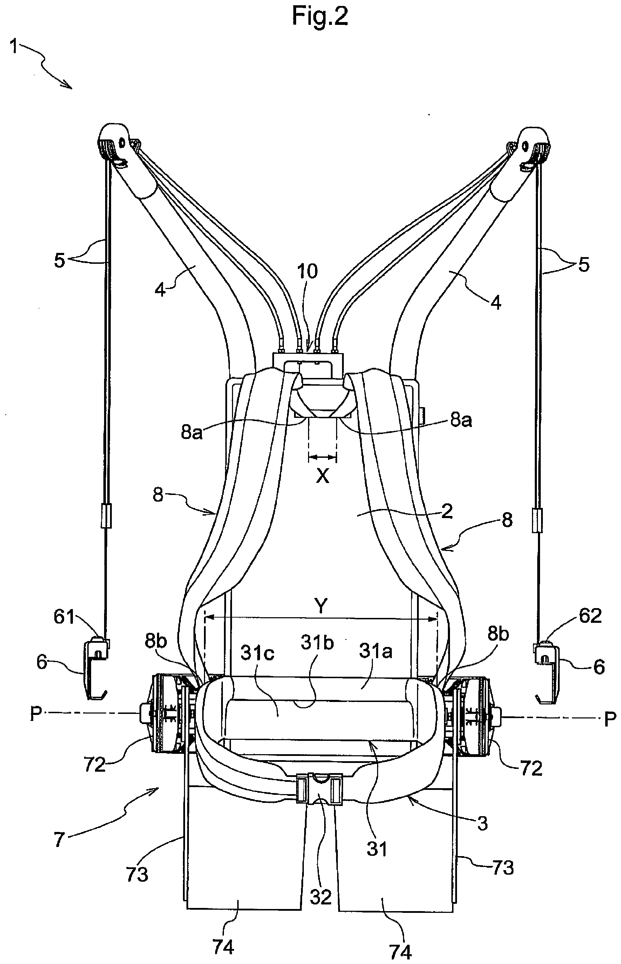

FIGS. 1 and 2 show the overall configuration of the assist suit 1 according to the present invention. The assist suit 1 includes a body portion 2. Also, a waist belt 3 is extended from the body portion 2. The waist belt 3 is supported at a lower side portion in the body portion 2. Note that in the lower side portion of the body portion 2, a portion supporting the waist belt 3 spans across left and right end portions of the body portion 2.

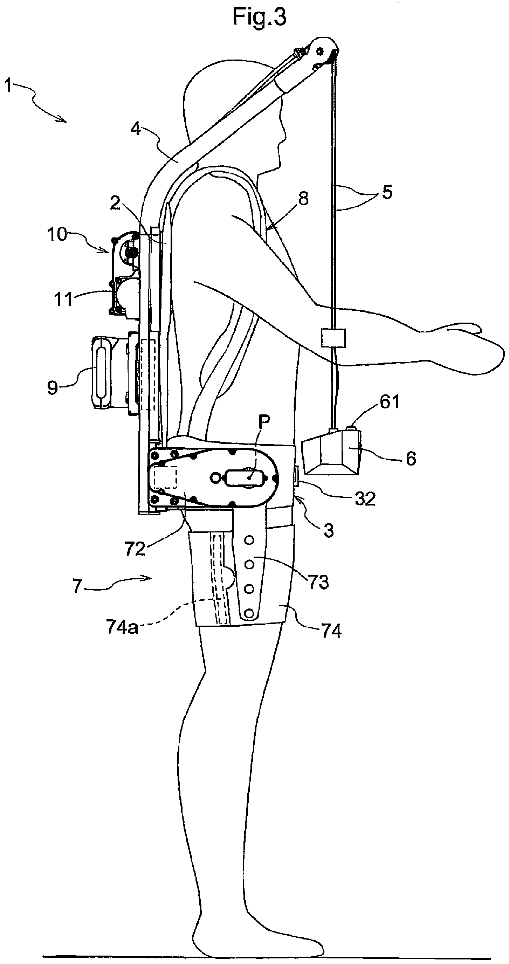

As shown in FIG. 3, the waist belt 3 is wound around the waist of the worker to fit the body portion 2 to the worker. Also, when the waist belt 3 is wound around the waist of the worker, the body portion 2 is in a state fitted to the back of the worker.

In this way, the assist suit 1 includes the body portion 2 fitted to the back of the worker, and the waist belt 3 that extends from the body portion 2 and is wound around the waist of the worker to fit the body portion 2 to the worker.

Note that, as shown in FIGS. 1 and 2, the waist belt 3 includes an insertion-type buckle 32. When winding the waist belt 3 around the waist, the worker first detaches the insertion-type buckle 32. Then, the worker winds the waist belt 3 around the waist and couples the insertion-type buckle 32. In this way, the waist belt 3 is kept in a state wound around the waist of the worker.

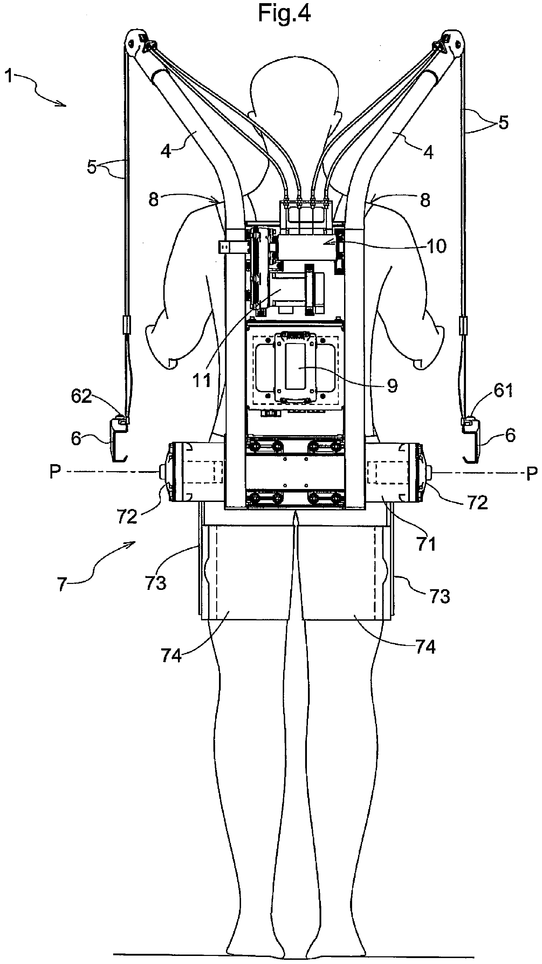

As shown in FIGS. 1 and 2, the assist suit 1 includes a left-right pair of arm portions 4. As shown in FIGS. 3 and 4, the left-right pair of arm portions 4 extend to the front side from the body portion 2 through an area above the shoulders of the worker.

In this way, the assist suit 1 includes the arm portions 4 that extend to the front side from the body portion 2 through an area above the worker.

Also, as shown in FIGS. 2 to 4, hand portions 6 are suspended from tip end portions of each of the left-right pair of arm portions 4 through winch wires 5. The hand portions 6 are configured so as to be capable of being attached to an object to be lifted. Also, the hand portions 6 are configured so as to serve as handles for the worker in a state where the hand portions 6 have been attached to an object to be lifted.

In this way, the assist suit 1 includes the hand portions 6 suspended from tip end portions of the arm portions 4 through the winch wires 5, and serving as handles for the worker in a state where the hand portions 6 have been attached to an object to be lifted.

A raising switch 61 is provided in the hand portion 6 on the right side. Also, a lowering switch 62 is provided in the hand portion 6 on the left side.

As shown in FIGS. 1 to 4, a winch device 10 is attached to an upper portion of a rear face of the body portion 2. Also, a battery 9 is attached below the winch device 10.

The winch wires 5 extend from winch device 10. Also, the winch device 10 has a winch electric motor 11. The winch device 10 is capable of winding and unwinding the winch wires 5 using rotational driving of the winch electric motor 11.

In this way, the assist suit 1 includes the winch device 10 capable of winding and unwinding the winch wires 5.

Also, as shown in FIGS. 1 to 4, the assist suit 1 has a left-right pair of shoulder belts 8 hooked over both shoulders of the worker. Note that the left-right pair of shoulder belts 8 are pullout-type shoulder belts.

In a case where the worker has lifted a package using the assist suit 1, the weight of the package and the assist suit 1 is mainly applied to the waist belt 3. As a result, the worker can stably support the weight of the package and the assist suit 1 using the waist. Also, at this time, by the left-right pair of shoulder belts 8, the body portion 2 is prevented from separating from the back of the worker by falling backward.

### Configuration of Waist Belt

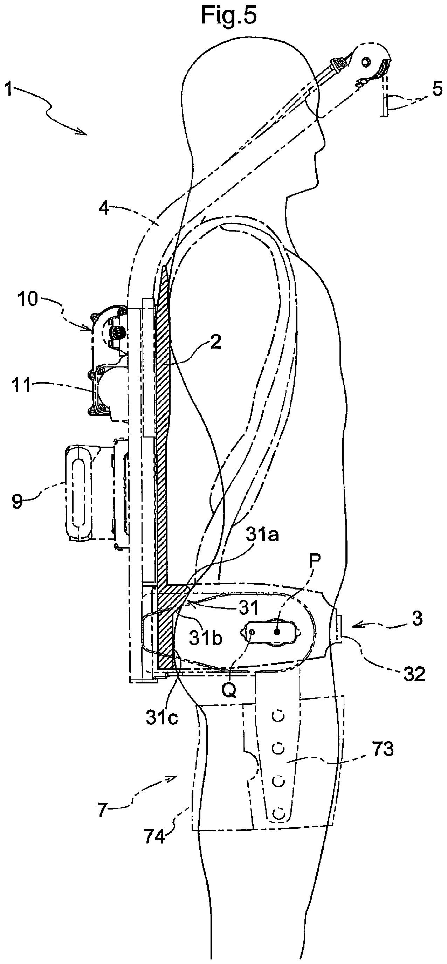

As shown in FIGS. 1 and 2, the waist belt 3 has a back surface contact portion 31. As shown in FIG. 5, the back surface contact portion 31 contacts the back surface of the worker in a state where the waist belt 3 has been wound around the waist of the worker.

As shown in FIGS. 1, 2, and 5, a bulging portion 31a and a recessed portion 31c are formed in the back surface contact portion 31. The bulging portion 31a bulges in the belt thickness direction compared to the recessed portion 31c. In other words, the recessed portion 31c is recessed in the belt thickness direction compared to the bulging portion 31a. Also, the recessed portion 31c is formed as a surface in the vertical direction.

The recessed portion 31c is formed from an intermediate portion to a lower end portion in the vertical direction of the back surface contact portion 31. Also, the bulging portion 31a is formed on the upper side relative to the recessed portion 31c. Further, a stepped portion 31b is formed between the recessed portion 31c and the bulging portion 31a.

In this way, the stepped portion 31b is formed between the recessed portion 31c in the back surface contact portion 31 and a portion on the upper side relative to the recessed portion 31c.

Here, when the worker winds the waist belt 3 around the waist, as shown in FIG. 5, the worker can obtain a feeling of good fit in a state with the recessed portion 31c contacting the worker's buttocks and the bulging portion 31a contacting the worker's waist. As a result, the worker tends to wind the waist belt 3 at a height where the recessed portion 31c contacts the buttocks and the bulging portion 31a contacts the waist. That is, in the present embodiment, the recessed portion 31c functions as a positioning mechanism.

In this way, the back surface contact portion 31 of the waist belt 3 that contacts the back surface of the worker is provided with a positioning mechanism that prescribes the position where the waist belt 3 is wound. Also, the positioning mechanism in the present embodiment is the recessed portion 31c that is recessed in the belt thickness direction formed from the intermediate portion to the lower end portion in the vertical direction of the back surface contact portion 31.

Also, as shown in FIG. 2, the recessed portion 31c is formed spanning across the left and right ends of the back surface contact portion 31.

In this way, the positioning mechanism in the present embodiment is formed spanning across the left and right ends of the back surface contact portion 31.

### Configuration of Leg Assist Device

As shown in FIGS. 1 to 5, the assist suit 1 includes a leg assist device 7. As shown in FIGS. 3 and 4, the leg assist device 7 extends to the front side from the body portion 2 through areas beside the worker. Also, as shown in FIG. 1, the leg assist device 7 has a base portion 71, a left-right pair of transmission cases 72, a left-right pair of operation arms 73, and a left-right pair of leg holding portions 74.

The base portion 71 is supported under the body portion 2 in a state capable of sliding in the left-right direction. A leg electric motor (not shown) is provided inside the base portion 71. Also, the left-right pair of transmission cases 72 are provided in a state extending frontward from both left and right end portions of the base portion 71. Also, as shown in FIGS. 1 and 2, an operation arm 73 is supported by each of the left-right pair of transmission cases 72. That is, the operation arms 73 are supported by the body portion 2 through the base portion 71 and the transmission cases 72.

The operation arms 73 are supported in a state capable of swinging around a pivot axis P in the left-right direction. That is, the operation arms 73 can swing in the vertical direction. Further, the leg assist device 7 can cause the operation arms 73 to swing in the vertical direction by driving the leg electric motor.

Also, the leg holding portions 74 are supported by the operation arms 73. As shown in FIGS. 3 and 4, the leg holding portions 74 are fitted to the thighs of the worker.

The leg holding portions 74 are belt-like members. Also, as shown in FIG. 1, each leg holding portion 74 is provided with a hook-and-loop fastener 74a capable of joining end portions of the leg holding portion 74 to each other. By bringing the hook-and-loop fastener 74a into an engaged state, the leg holding portion 74 has an annular shape as shown in FIG. 3.

When fitting the leg holding portion 74 to the thigh, the worker first detaches the hook-and-loop fastener 74a. Then, the worker winds the leg holding portion 74 around the thigh, and brings the hook-and-loop fastener 74a into an engaged state. In this way, the leg holding portion 74 is fitted to the thigh of the worker. Note that in FIGS. 3 to 5, the body portion 2 and the leg holding portions 74 have been fitted to the worker.

As shown in FIG. 5, the pivot axis P is positioned lower than the stepped portion 31b. Also, the pivot axis P is positioned higher than the lower end portion of the waist belt 3. Note that the position of the pivot axis P may be a position at the same height as the stepped portion 31b.

In this way, in a state where the body portion 2 and the leg holding portions 74 have been fitted to the worker, the pivot axis P of the operation arms 73 is positioned at the same height as the stepped portion 31b or lower than the stepped portion 31b. Also, in a state where the body portion 2 and the leg holding portions 74 have been fitted to the worker, the pivot axis P is positioned higher than the lower end portion of the waist belt 3.

Also, as shown in FIG. 5, the height of the pivot axis P of the operation arms 73 is approximately equal to the height of a vertical swinging center (hip joint) Q of the thigh of the worker.

### Movement of Leg Assist Device

Here, movement of the leg assist device 7 will be described. Below, as an example, a case is described where a worker places a package that has been placed on the floor onto a truck bed.

In a case where, in a state where the worker is wearing the assist suit 1, the worker is not pushing either the raising switch 61 or the lowering switch 62, the winch device 10 is stopped. Also, at this time, the leg electric motor is in a free rotation state. That is, when the worker is walking or the worker bends their knees to drop the waist (when crouching), if the worker is not pushing either the raising switch 61 or the lowering switch 62, the operation arms 73 swing around the pivot axis P following movement of the thighs of the worker. Accordingly, movement of the worker is not hindered.

Next, in a case where the worker crouches and holds the package on the floor by hand, when the worker performs pushing operation of the lowering switch 62, the winch wires 5 are extended by rotational driving of the winch electric motor 11. As a result, the left-right pair of hand portions 6 descend. When the worker quits the pushing operation of the lowering switch 62, the winch electric motor 11 stops. As a result, descent of the left-right pair of hand portions 6 stops.

The winch electric motor 11 is provided with an electromagnetic brake (not shown). When rotationally driving the winch electric motor 11, the electromagnetic brake is in a released state. Also, when the winch electric motor 11 is stopped or is not energized, the electromagnetic brake is in a braking state.

As a result, in a state where the winch electric motor 11 is stopped, even if the weight of the package is applied to the left-right pair of hand portions 6, the left-right pair of hand portions 6 do not descend.

Next, the worker holds the right (left) hand portion 6 with their right hand (left hand), and attaches the left-right pair of hand portions 6 to the package. In this state, when the worker performs pushing operation of the raising switch 61, the leg electric motor drives in a direction that causes the operation arms 73 to swing downward. Also, the driving force of the leg electric motor acts on the thighs of the worker through the operation arms 73 and the leg holding portions 74. That is, the front side of the thighs of the worker are pushed downward. Therefore, standing of the worker is assisted.

When the worker stands up, the package is lifted up from the floor. After the worker stands up while performing pushing operation of the raising switch 61, when a sensor (not shown) detects that the direction of the left-right pair of operation arms 73 has reached approximately straight down, it is judged that the worker has completely stood up. Then, the leg electric motor enters the free rotation state.

Next, the winch wires 5 are wound up by rotational driving of the winch electric motor 11. Thus, the left-right pair of hand portions 6 rise. Then, when the worker quits the pushing operation of the raising switch 61, the winch electric motor 11 stops. As a result, rising of the left-right pair of hand portions 6 stops.

Next, the worker walks to the vicinity of the truck bed where the package is to be placed. When the worker arrives near the truck bed and the worker performs pushing operation of the lowering switch 62, the winch wires 5 are unwound by rotational driving of the winch electric motor 11. As a result, the left-right pair of hand portions 6 descend. Then, the worker can place the package on the truck bed.

When the package is placed on the truck bed in the manner described above, the initial state is reestablished. Then, the worker can perform similar work for a subsequent package.

In this way, the assist suit 1 includes the leg assist device 7 that extends to the front side from the body portion 2 through areas beside the worker, and assists the worker in a standing movement by exerting a pushing action on the thighs of the worker from the front side.

Also, in this way, the leg assist device 7 has the operation arms 73 supported by the body portion 2 in a state capable of swinging in the vertical direction, and the leg holding portions 74 supported by the operation arms 73 and fitted to the thighs of the worker, and is configured such that by causing the operation arms 73 to swing in the vertical direction, the leg assist device 7 acts on the thighs of the worker through the leg holding portions 74.

### Configuration of Shoulder Belts

As shown in FIGS. 1 and 2, respective upper side end portions 8a of the left-right pair of shoulder belts 8 are supported by an upper side portion of the body portion 2. Also, respective lower side end portions 8b of the left-right pair of shoulder belts 8 are supported by the waist belt 3. That is, the lower side end portions 8b are supported by the lower side portion of the body portion 2 through the waist belt 3. Also, the lower side end portions 8b are supported by the left and right end portions of the body portion 2 through the waist belt 3.

In this way, the upper side end portions 8a of the left-right pair of shoulder belts 8 are supported by the upper side portion of the body portion 2. Also, the lower side end portions 8b of the left-right pair of shoulder belts 8 are supported by the lower side portion of the body portion 2. Furthermore, the lower side end portions 8b of the left-right pair of shoulder belts 8 are supported by the left and right end portions of the body portion 2.

Also, as shown in FIGS. 1 and 2, the upper side end portions 8a of the left-right pair of shoulder belts 8 are supported by a center portion in the left-right direction of the body portion 2.

Also, as shown in FIG. 2, an interval X between the upper side end portions 8a in the left-right pair of shoulder belts 8 is narrower than an interval Y between the lower side end portions 8b in the left-right pair of shoulder belts 8. Note that the upper side end portions 8a of the left-right pair of shoulder belts 8 may be in contact with each other. That is, the size of the interval X may be 0 (zero).

According to the configuration described above, due to the recessed portion 31c (the positioning mechanism) provided in the back surface contact portion 31, the height where the waist belt 3 is wound easily matches the height assumed by the designer. That is, the positions of the hand portions 6 and the leg assist device 7 also easily match the height assumed by the designer.

Therefore, according to the configuration described above, a situation where the worker feels uncomfortable about the positions of the hand portions 6 and the leg assist device 7, or a situation where a movement is insufficiently assisted, are easily avoided.

### Other Embodiments

(1) The positioning mechanism is not limited to the recessed portion 31c. For example, as a positioning mechanism, a reference line for matching to the boundary between the waist and the buttocks of the worker may be provided in the back surface contact portion 31. In that case, the position at which to wind the waist belt 3 is prescribed by the reference line.
(2) The stepped portion 31b may not be provided.
(3) The recessed portion 31c may not be formed as a surface in the vertical direction. For example, the recessed portion 31c may be formed as a surface inclined upwardly frontward.
(4) The left-right pair of shoulder belts 8 do not have to be pullout-type shoulder belts. For example, a configuration may be adopted in which the upper side end portions 8a and the lower side end portions 8b of the shoulder belts 8 are fixed to the body portion 2, and a length adjusting member for adjusting the length of the shoulder belts 8 is provided in an intermediate portion of the shoulder belts 8.
(5) The base portion 71 may be supported under the body portion 2 in a state not capable of sliding in the left-right direction.
(6) Instead of the left-right pair of arm portions 4, one arm portion 4 may be provided. In that case, a configuration may be adopted in which, for example, two of the winch wires 5 extend from the one arm portion 4, the right side hand portion 6 is suspended from the tip end of one winch wire 5, and the left side hand portion 6 is suspended from the tip end of the other winch wire 5.

### (Second Embodiment)

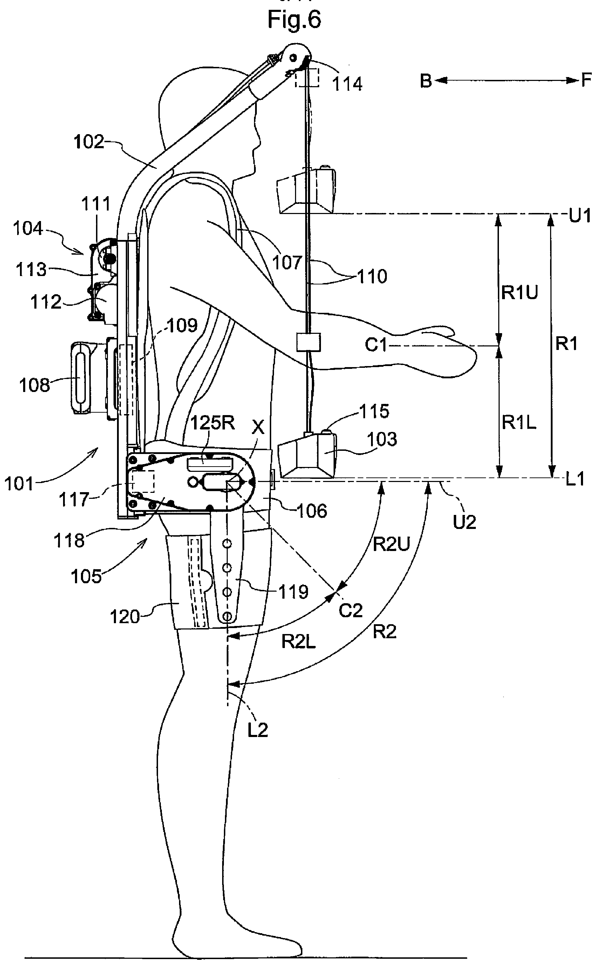

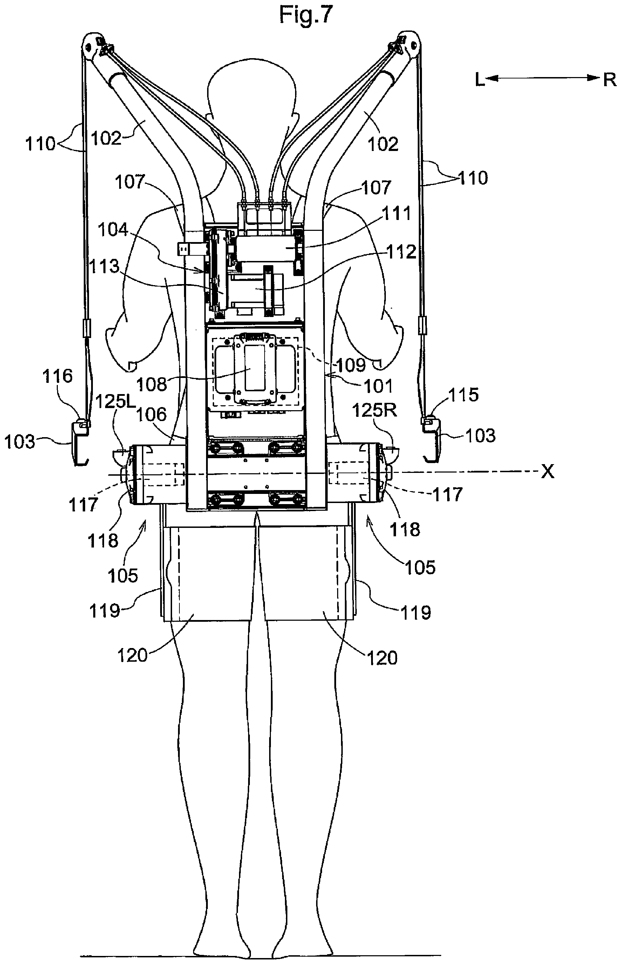

An embodiment for carrying out the present invention will be described with reference to the drawings. Note that in the following description, the direction of arrow F shown in FIG. 6 is referred to as the "front side", the direction of arrow B is referred to as the "rear side", the direction of arrow L shown in FIG. 7 is referred to as the "left side", and the direction of arrow R is referred to as the " right side".

### Overall Configuration of Assist Suit

As shown in FIGS. 6 to 8, an assist suit includes a body portion 101, a left-right pair of arm portions 102, a left-right pair of hand portions 103, a winch device 104, and a left-right pair of leg assist devices 105.

### Body Portion

The body portion 101 is fitted to the back of a worker. A waist belt 106 wound around the waist of the worker and a left-right pair of shoulder belts 107 hooked over the shoulders of the worker are attached to the body portion 101. The waist belt 106 is wound around the waist of the worker, and the left-right pair of shoulder belts 107 are hooked over the shoulders of the worker to fit the body portion 101 to the back of the worker. In the body portion 101, a battery 108 serving as main power and a control portion 109 are provided.

### Winch Device

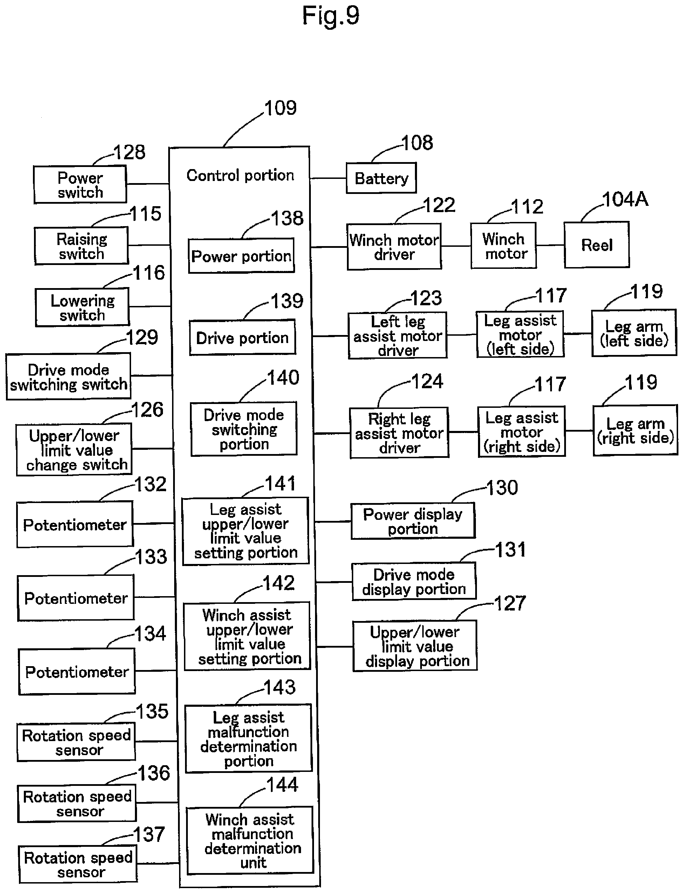

The winch device 104 is attached to a rear face of the body portion 101. The winch device 104 is capable of winding and unwinding winch wires 110. The winch device 104 includes a reel case 111, a winch motor 112, and a transmission case 113. A reel 104A (see FIG. 9) around which the winch wires 110 are wound is built into the reel case 111. The winch motor 112 rotationally drives the reel 104A. A transmission mechanism (not shown) that transmits the rotational driving force of the winch motor 112 to the reel 104A is built into the transmission case 113.

The winch motor 112 has a motor brake (not shown). The motor brake is in a released state when the winch motor 112 is being driven, and is in a braking state when the winch motor 112 is stopped. In the present embodiment, when the winch motor 112 is stopped, the winch wires 110 are held by the motor brake such that the winch wires 110 are not rewound.

### Arm Portions

The arm portions 102 extend to the front side from the body portion 101 through an area above the worker. Specifically, the arm portions 102 extend to the front side in a posture inclined upwardly frontward from both left and right side portions of the body portion 101 through an area above the shoulder portions of the worker. The left-right interval between the left-right pair of arm portions 102 gradually increases as the arm portions 102 extend to the front side. A pulley 114 around which a winch wire 110 is wound is provided at the tip end portion of each arm portion 102. The winch wire 110 hangs from the tip end portion of the arm portion 102 in a state wound around the pulley 114.

### Hand Portions

The hand portions 103 are suspended from the tip end portions of the arm portions 102 through the winch wires 110. The hand portions 103 serve as handles for the worker in a state where the hand portions 103 have been attached to an object to be lifted (not shown). A manually operated raising switch 115 is provided in the right side hand portion 103, and a manually operated lowering switch 116 is provided in the left side hand portion 103.

The raising switch 115 is a resetting-type switch, and issues a command signal only while the worker is performing pushing operation of the raising switch 115. The worker can perform pushing operation of the raising switch 115 with their right hand thumb in a state where the worker is holding the right side hand portion 103 with their right hand.

The lowering switch 116 is a resetting-type switch, and issues a command signal only while the worker is performing pushing operation of the lowering switch 116. The worker can perform pushing operation of the lowering switch 116 with their left hand thumb in a state where the worker is holding the left side hand portion 103 with their left hand.

### Leg Assist Device

The leg assist devices 105 assist a movement in which the worker stands up by acting on the thighs of the worker. The leg assist devices 105 include a leg assist motor 117, a transmission case 118, a leg arm 119, and a leg belt 120.

The leg assist motor 117 drives the leg arm 119 to swing. The transmission case 118 extends to the front side from the body portion 101 through areas beside the worker (the waist of the worker). A transmission mechanism (not shown) that transmits the swing driving force of the leg assist motor 117 to the leg arm 119 is built into the transmission case 118. The leg arm 119 is supported by the front end portion of the transmission case 118 such that the leg arm 119 can swing around an axis X that extends in the left-right direction. The leg belt 120, which is wound around a thigh of the worker, is attached to the leg arm 119.

A left switch disposing portion 125L is provided in a lateral outer side portion on the left side of the transmission case 118. Provided in the left switch disposing portion 125L are an upper/lower limit value change switch 126 (corresponding to an "operation portion", a "second operation portion", a "leg assist change command operation portion", and a "winch assist change command operation portion" according to the present disclosure) and an upper/lower limit value display portion 27. That is, the upper/lower limit value change switch 126 and the upper/lower limit value display portion 127 are disposed in a portion that is positioned on the left side of the worker in the leg assist device 105 on the left side. The upper/lower limit value change switch 126 and the upper/lower limit value display portion 127 will be described in detail later.

A right switch disposing portion 125R is provided in a lateral outer side portion on the right side of the transmission case 118. Provided in the right switch disposing portion 125R are a power switch 128 (corresponding to an "operation portion", a "first operation portion", and a "power operation portion" according to the present disclosure), a drive mode switching switch 129 (corresponding to an "operation portion" and a "first operation portion" according to the present disclosure), a power display portion 130, and a drive mode display portion 131. That is, the power switch 128, the drive mode switching switch 129, the power display portion 130, and the drive mode display portion 131 are disposed in a portion that is positioned on the right side of the worker in the leg assist device 105 on the right side. Also, the power switch 128, the drive mode switching switch 129, the power display portion 130, and the drive mode display portion 131 will be described in detail later.

### Operation Range of Winch Device and Leg Assist Devices

As shown in FIG. 6, an operation range R1 of the winch device 104 corresponds to a raising/lowering range of the hand portions 103. Also, the upper limit value of the operation range R1 of the winch device 104 is represented as a winch assist upper limit value U1, and the lower limit value of the operation range R1 of the winch device 104 is represented as a winch assist lower limit value L1. Further, an area on the upper limit side relative to a center C1 in the operation range R1 of the winch device 104 is represented as a winch assist upper limit side area R1U, and an area on the lower limit side relative to the center C1 in the operation range R1 of the winch device 104 is represented as a winch assist lower limit side area R1L. Note that the operation range R1 of the winch device 104 shown in FIG. 6 is an example, and may be changed somewhat.

An operation range R2 of the leg assist devices 105 corresponds to a swinging range of the leg arm 119. Also, the upper limit value of the operation range R2 of the leg assist devices 105 is represented as a leg assist upper limit value U2, and the lower limit value of the operation range R2 of the leg assist devices 105 is represented as a leg assist lower limit value L2. Further, an area on the upper limit side relative to a center C2 in the operation range R2 of the leg assist devices 105 is represented as a leg assist upper limit side area R2U, and an area on the lower limit side relative to the center C2 in the operation range R2 of the leg assist devices 105 is represented as a leg assist lower limit side area R2L. Note that the operation range R2 of the leg assist devices 105 shown in FIG. 6 is an example, and may be changed somewhat.

### Control Portion

As shown in FIG. 9, the assist suit, in order to control operation of the winch device 104 and the leg assist devices 105, includes a control portion 109, potentiometers 132, 133, and 134, rotation speed sensors 135, 136 and 137, a winch motor driver 122, a left leg assist motor driver 123, and a right leg assist motor driver 124. The control portion 109, the winch motor driver 122, the left leg assist motor driver 123, and the right leg assist motor driver 124 can communicate with each other by in-vehicle communications such as CAN communications. The raising switch 115, the lowering switch 116, the upper/lower limit value change switch 126, the power switch 128, the drive mode switching switch 129, the upper/lower limit value display portion 127, the power display portion 130, and the drive mode display portion 131 are connected to the control portion 109.

The potentiometer 132 detects the swing angle of the left side leg arm 119. The potentiometer 133 detects the swing angle of the right side leg arm 119. The potentiometer 134 detects the rotation angle of the reel 104A.

The rotation speed sensor 135 detects the rotation speed of the left side leg assist motor 117. The rotation speed sensor 136 detects the rotation speed of the right side leg assist motor 117. The rotation speed sensor 137 detects the rotation speed of the winch motor 112.

The winch motor driver 122 receives a drive command of the control portion 109 (a drive portion 139) and drives the winch motor 112 according to the driving command. The left leg assist motor driver 123 receives the drive command of the control portion 109 (the drive portion 139) and drives the left side leg assist motor 117 according to the drive command. The right leg assist motor driver 124 receives the drive command of the control portion 109 (the drive portion 139) and drives the right side leg assist motor 117 according to the drive command.

The control portion 109 includes a power portion 138, the drive portion 139, a drive mode switching portion 140, a leg assist upper/lower limit value setting portion 141, a winch assist upper/lower limit value setting portion 142, a leg assist malfunction determination portion 143, and a winch assist malfunction determination unit 144. The power portion 138 supplies electric power of the battery 108 to various devices according to commands from the power switch 128. The drive portion 139 issues drive commands to the winch motor driver 122, the left leg assist motor driver 123, and the right leg assist motor driver 124 in response to commands from the raising switch 115 or the lowering switch 116.

The drive mode switching portion 140 switches the drive mode of the assist suit according to a command from the drive mode switching switch 129. In the present embodiment, as drive modes of the assist suit, there are assumed an advanced mode suitable for use by an advanced user, a beginner mode suitable for use by a beginner, and a practice mode suitable for practicing. However, the drive modes of the assist suit are not limited to these.

The leg assist upper/lower limit value setting portion 141 sets the leg assist upper limit value U2 and the leg assist lower limit value L2. The leg assist upper/lower limit value setting portion 141 has a mode (a leg assist upper/lower limit value change mode) in which it is possible to change the leg assist upper limit value U2 and the leg assist lower limit value L2.

The winch assist upper/lower limit value setting portion 142 sets the winch assist upper limit value U1 and the winch assist lower limit value L1. The winch assist upper/lower limit value setting portion 142 has a mode (a winch assist upper/lower limit value change mode) in which it is possible to change the winch assist upper limit value U1 and the winch assist lower limit value L1.

The leg assist malfunction determination portion 143 calculates (estimates) the swing angles of the leg arms 119 based on the detection values of the rotation speed sensors 135 and 136, and compares the calculated swing angles with the detection values of the potentiometers 132 and 133. In a case where the values are different, it is judged that the potentiometers 132 and 133 have a malfunction, and assistance by the leg assist devices 105 is stopped.

The winch assist malfunction determination portion 144 calculates (estimates) the rotation angle of the reel 104A based on the detection value of the rotation speed sensor 137, and compares the calculated rotation angle with the detection value of the potentiometer 134. In a case where the values are different, it is judged that the potentiometer 134 has a malfunction, and assistance by the winch device 104 is stopped.

The upper/lower limit value change switch 126 is a manually operated switch that commands the leg assist upper/lower limit value setting portion 141 to change the leg assist upper limit value U2 and the leg assist lower limit value L2, and commands the winch assist upper/lower limit value setting portion 142 to change the winch assist upper limit value U1 and the winch assist lower limit value L1. The power switch 128 is a manually operated switch that switches main power (supply of electric power from the battery 108) on/off. The drive mode switching switch 129 is a manually operated switch that switches the drive mode of the assist suit.

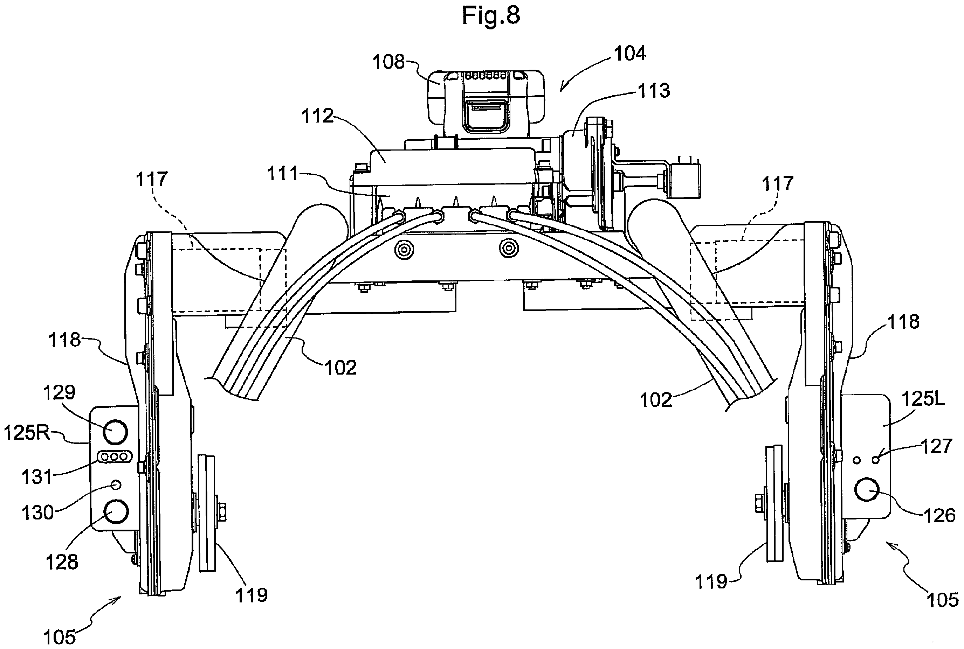

The upper/lower limit value display portion 127 is provided with LEDs (for example, two) (see FIG. 8), and according to the leg assist upper/lower limit value change mode or the winch assist upper/lower limit value change mode, some LED among the two LEDs lights up. The power display portion 130 is provided with an LED (for example, one) (see FIG. 8), and the LED lights up according to on/off operation of the power switch 128. The drive mode display portion 131 is provided with LEDs (for example, three) (see FIG. 8), and some LED among the three LEDs lights up according to the drive mode of the assist suit.

### Mutual Monitoring Function of Control Portion and Motor Drivers

When the control portion 109 (the drive portion 139) sends a drive command to the motor drivers 122, 123, and 124, the motor drivers 122, 123, and 124 that received the drive command then drive the motors 112, 117 and 117, and also send a reply to the control portion 109 with the content of the drive command and the motor drive status (torque and rotation speed). Also, when the content of the drive command transmitted previously by the control portion 109 and the content of the drive command received in the reply are not the same, the control portion 109 transmits a drive stop command to the motor drivers 122, 123, and 124, and also does not accept operation from the worker.

Regarding the motor drivers 122, 123, and 124 receiving a drive command from the control portion 109 (the drive portion 139) and driving the motors 12, 17 and 17 according to the drive command, the period in which the drive command is sent from the control portion 9 (the drive portion 139) to the motor drivers 122, 123, and 124 is set in advance. In a case where a drive command has not been transmitted from the control portion 109 (the drive portion 139) according to that preset period, the motor drivers 122, 123, and 124 judge that there is a malfunction and do not drive the motors 112, 117 and 117. In this case, the motor drivers 122, 123, and 124 may gradually decrease the output of the motors 112, 117 and 117.

### Leg Assist Upper/Lower Limit Value Change Mode And Winch Assist Upper/Lower Limit Value Change Mode

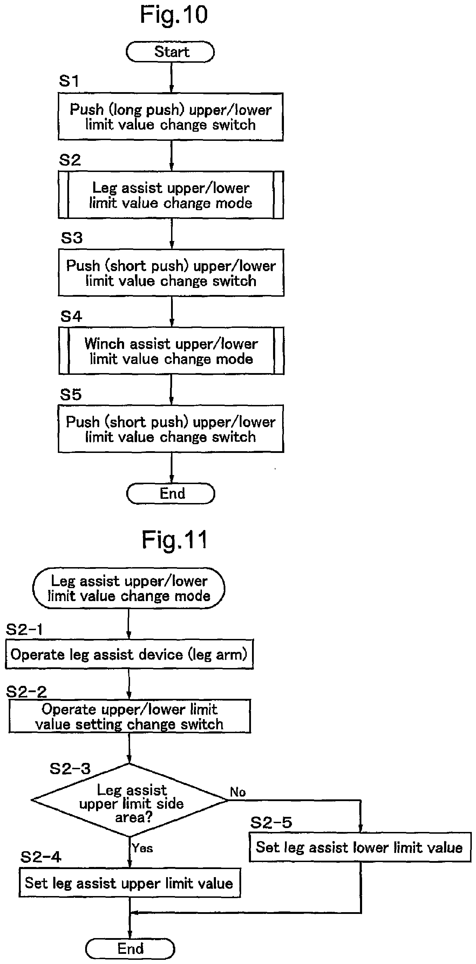

Next, the leg assist upper/lower limit value change mode and the winch assist upper/lower limit value change mode will be described with reference to FIGS. 10 to 12.

As shown in FIG. 10, when the upper/lower limit value change switch 126 is pushed (long push)(S1), the mode is switched from the initial state to the leg assist upper/lower limit value change mode (S2). Along with this, the LED corresponding to the leg assist upper/lower limit value change mode in the upper/lower limit value display portion 127 is lit.

When the upper/lower limit value change switch 126 is pushed another time (short push)(S3), the mode is switched from the leg assist upper/lower limit value change mode to the winch assist upper/lower limit value change mode (S4). Along with this, the LED corresponding to the leg assist upper/lower limit value change mode in the upper/lower limit value display portion 127 is turned off, and the LED corresponding to the winch assist upper/lower limit value change mode in the upper/lower limit value display portion 127 is lit.

When the upper/lower limit value change switch 126 is pushed another time (short push)(S5), the mode returns from the winch assist upper/lower limit value change mode to the initial state. Along with this, all the LEDs of the upper/lower limit value display portion 127 are turned off.

As shown in FIG. 11, in the leg assist upper/lower limit value change mode, the worker swings the leg arms 119 to an arbitrary swing position (S2-1). In this case, the worker may perform pushing operation of the raising switch 115 or the lowering switch 116 to swing the leg arms 119 using the leg assist motors 117, or may manually swing the leg arms 119.

Then, when the worker pushes (short push) the upper/lower limit value change switch 126 in a state with the leg arms 119 swung to an arbitrary swing position (S2-2), the leg assist upper/lower limit value setting portion 141 judges whether the swing position of the leg arms 119 at the time when the upper/lower limit value change switch 126 was pushed belongs to either of the leg assist upper limit side area R2U and the leg assist lower limit side area R2L (S2-3).

Then, in a case where the swing position of the leg arms 119 at the time when the upper/lower limit value change switch 126 was pushed belongs to the leg assist upper limit side area R2U (S2-3: Yes), the leg assist upper/lower limit value setting portion 141 sets the swing position of the leg arms 119 at the time when the upper/lower limit value change switch 126 was pushed to the leg assist upper limit value U2 (S2-4). In the present embodiment, the previous leg assist upper limit value U2 is overwritten with the present leg assist upper limit value U2.

On the other hand, in a case where the swing position of the leg arms 119 at the time when the upper/lower limit value change switch 126 was pushed belongs to the leg assist lower limit side area R2L (S2-3: Yes), the leg assist upper/lower limit value setting portion 141 sets the swing position of the leg arms 119 at the time when the upper/lower limit value change switch 126 was pushed to the leg assist lower limit value L2 (S2-5). In the present embodiment, the previous leg assist lower limit value L2 is overwritten with the present leg assist lower limit value L2.

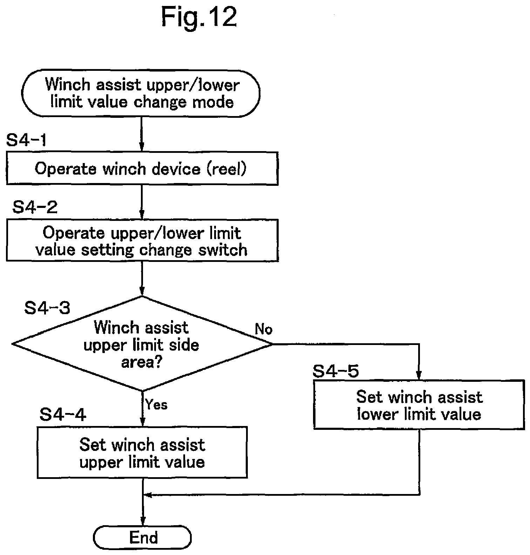

As shown in FIG. 12, in the winch assist upper/lower limit value change mode, the worker rotates the reel 104A to an arbitrary rotation position (S4-1). In this case, the worker may perform pushing operation of the raising switch 115 or the lowering switch 116 to rotate the reel 104A using the winch motor 112.

Then, when the worker pushed (short push) the upper/lower limit value change switch 126 in a state with the reel 104A rotated to an arbitrary rotation position (S4-2), the winch assist upper/lower limit value setting portion 142 judges whether the rotation position of the reel 104A at the time when the upper/lower limit value change switch 126 was pushed belongs to either of the winch assist upper limit side area R1U and the winch assist lower limit side area R1L (S4-3).

Then, in a case where the rotation position of the reel 104A at the time when the upper/lower limit value change switch 126 was pushed belongs to the winch assist upper limit side area R1U (S4-3: Yes), the winch assist upper/lower limit value setting portion 142 sets the rotation position of the reel 104A at the time when the upper/lower limit value change switch 126 was pushed to the winch assist upper limit value U1 (S4-4). In the present embodiment, the previous winch assist upper limit value U1 is overwritten with the present winch assist upper limit value U1.

On the other hand, in a case where the rotation position of the reel 104A at the time when the upper/lower limit value change switch 126 was pushed belongs to the winch assist lower limit side area R1L (S4-3: Yes), the winch assist upper/lower limit value setting portion 42 sets the rotation position of the reel 104A at the time when the upper/lower limit value change switch 126 was pushed to the winch assist lower limit value L1 (S4-5). In the present embodiment, the previous winch assist lower limit value L1 is overwritten with the present winch assist lower limit value L1.

### Other Embodiments

(1) In the above embodiment, the upper/lower limit value change switch 126 and the upper/lower limit value display portion 127 are disposed in a portion that is positioned to the left side of the worker in the leg assist device 105 on the left side, and the power switch 128, the drive mode switching switch 129, the power display portion 130, and the drive mode display portion 131 are disposed in a portion that is positioned to the right side of the worker in the leg assist device 105 on the right side, but a configuration may also be adopted in which the power switch 128, the drive mode switching switch 129, the power display portion 130, and the drive mode display portion 131 are disposed in a portion that is positioned to the left side of the worker in the leg assist device 105 on the left side, and the upper/lower limit value change switch 126 and the upper/lower limit value display portion 127 are disposed in a portion that is positioned to the right side of the worker in the leg assist device 105 on the right side. Also, the switches and the like that are disposed in a portion that is positioned to the left side of the worker in the leg assist device 105 on the left side or in a portion that is positioned to the right side of the worker in the leg assist device 105 on the right side are not limited to those in the above embodiment.
(2) In the above embodiment, an area on the upper limit side relative to a center C2 in the operation range R2 of the leg assist devices 105 is represented as a leg assist upper limit side area R2U, and an area on the lower limit side relative to the center C2 in the operation range R2 of the leg assist devices 105 is represented as a leg assist lower limit side area R2L, but an intermediate area may also be set between the leg assist upper limit side area R2U and the leg assist lower limit side area R2L. In this case, a configuration may be adopted in which, as shown in FIG. 11, in a case where the swing position of the leg arms 119 at the time when the upper/lower limit value change switch 126 was pushed belongs to the intermediate area, the leg assist upper/lower limit value setting portion 141 does not set the swing position of the leg arms 119 at the time when the upper/lower limit value change switch 126 was pushed to any of the leg assist upper limit value U2 and the leg assist lower limit value L2.
(3) In the above embodiment, an area on the upper limit side relative to a center C1 in the operation range R1 of the winch device 104 is represented as a winch assist upper limit side area R1U, and an area on the lower limit side relative to the center C1 in the operation range R1 of the winch device 104 is represented as a winch assist lower limit side area R1L, but an intermediate area may also be set between the winch assist upper limit side area R1U and the winch assist lower limit side area R1L. In this case, a configuration may be adopted in which, as shown in FIG. 12, in a case where the rotation position of the reel 104A at the time when the upper/lower limit value change switch 126 was pushed belongs to the intermediate area, the winch assist upper/lower limit value setting portion 142 does not set the rotation position of the reel 104A at the time when the upper/lower limit value change switch 126 was pushed to any of the winch assist upper limit value U1 and the winch assist lower limit value L1.
(4) In the above embodiment, when the upper/lower limit value change switch 126 is pushed (long push)(S1), the mode is switched from the initial state to the leg assist upper/lower limit value change mode (S2), and when the upper/lower limit value change switch 126 is pushed another time (short push)(S3), the mode is switched from the leg assist upper/lower limit value change mode to the winch assist upper/lower limit value change mode (S4), but instead, a configuration may be adopted in which when the upper/lower limit value change switch 126 is pushed (long push)(S1), the mode is switched from the initial state to the winch assist upper/lower limit value change mode (S2), and when the upper/lower limit value change switch 126 is pushed another time (short push)(S3), the mode is switched from the winch assist upper/lower limit value change mode to the leg assist upper/lower limit value change mode (S4).

### Description of Reference Signs

1: assist suit
2: body portion
3: waist belt
4: arm portion
5: winch wire
6: hand portion
7: leg assist device
8: shoulder belt
8a: upper side end portion
8b: lower side end portion
10: winch device
31: back surface contact portion
31b: stepped portion
31c: recessed portion (positioning mechanism)
73: operation arm
74: leg holding portion
P: pivot axis
101: body portion
102: arm portion
103: hand portion
104: winch device
105: leg assist device
110: winch wire
126: upper/lower limit value change switch (operation portion, second operation portion, leg assist change command operation portion, winch assist change command operation portion)
128: power switch (operation portion, first operation portion, power operation portion)
129: drive mode switching switch (operation portion, first operation portion)
141: leg assist upper/lower limit value setting portion
142: winch assist upper/lower limit value setting portion
L1: winch assist lower limit value
L2: leg assist lower limit value
R1: winch device operation range
R1U: winch assist upper limit side area
R1L: winch assist lower limit side area
R2: leg assist device operation range
R2U: leg assist upper limit side area
R2L: leg assist lower limit side area
U1: winch assist upper limit value
U2: leg assist upper limit value

## Claims

1. An assist suit (1), comprising:
a body portion (2) to be fitted to the back of a worker;
a waist belt (3) that extends from the body portion (2) and to be wound around the waist of the worker to fit the body portion (2) to the worker;
an arm portion (4) that extends to a front side from the body portion (2) through an area above the worker;
a hand portion (6) suspended from a tip end portion of the arm portion (4) through a winch wire (5), and serving as a handle for the worker in a state where the hand portion (6) has been attached to an object to be lifted;
a winch device (10) capable of winding and unwinding the winch wire (5); and
a leg assist device (7) that extends to the front side from the body portion (2) through an area beside the worker, and is configured to assist the worker in a standing movement by exerting a pushing action on a thigh of the worker from the front side;
wherein a back surface contact portion (31) of the waist belt (3) that contacts the back surface of the worker is provided with a positioning mechanism that prescribes the position where the waist belt (3) is wound, and
wherein the positioning mechanism is a recessed portion (31c) that is recessed in a belt thickness direction formed from an intermediate portion to a lower end portion in a vertical direction of the back surface contact portion (31).

2. The assist suit according to claim 1,
wherein a stepped portion (31b) is formed between the recessed portion (31c) in the back surface contact portion (31) and a portion (31a) on an upper side relative to the recessed portion.

3. The assist suit according to claim 2,
wherein the leg assist device (7) has an operation arm (73) supported by the body portion (2) in a state capable of swinging in the vertical direction, and a leg holding portion (74) supported by the operation arm (73) and to be fitted to a thigh of the worker, and is configured such that by causing the operation arm (73) to swing in the vertical direction, the leg assist device (7) acts on the thigh of the worker through the leg holding portion (74), and
in a state where the body portion (2) and the leg holding portion (74) have been fitted to the worker, a pivot axis (P) of the operation arm (73) is positioned at the same height as the stepped portion (31b) or lower than the stepped portion (31b).

4. The assist suit according to claim 3, wherein in a state where the body portion (2) and the leg holding portion (74) have been fitted to the worker, the pivot axis (P) is positioned higher than a lower end portion of the waist belt (3).

5. The assist suit according to any one of claims 1 to 4, wherein the positioning mechanism is formed spanning across left and right ends of the back surface contact portion (31).

6. The assist suit according to any one of claims 1 to 5, comprising:
a left-right pair of shoulder belts (8) hooked over both shoulders of the worker;
wherein upper side end portions (8a) of the left-right pair of shoulder belts (8) are supported by an upper side portion of the body portion (2),
lower side end portions (8b) of the left-right pair of shoulder belts (8) are supported by a lower side portion of the body portion (2), and
an interval between the upper side end portions (8a) in the left-right pair of shoulder belts (8) is narrower than an interval between the lower side end portions (8b) in the left-right pair of shoulder belts (8).

7. The assist suit according to claim 6,
wherein the upper side end portions (8a) of the left-right pair of shoulder belts (8) are supported by a center portion in a left-right direction of the body portion (2), and
the lower side end portions (8b) of the left-right pair of shoulder belts (8) are supported by left and right end portions of the body portion (2).

## Patentansprüche

1. Unterstützungsanzug (1), umfassend:
ein Körperteil (2), das am Rücken eines Arbeiters angebracht wird,
einen Taillengurt (3), der sich von dem Körperteil (2) erstreckt und um die Taille des Arbeiters geschlungen wird, um das Körperteil (2) an dem Arbeiter anzubringen,
ein Armteil (4), das sich durch einen Bereich oberhalb des Arbeiters von dem Körperteil (2) zu einer Vorderseite erstreckt,
ein Handteil (6), das über einen Windendraht (5) an einem Spitzenendabschnitt des Armteils (4) hängt und in einem Zustand, in dem das Handteil (6) an einem anzuhebenden Gegenstand befestigt worden ist, als Griff für den Arbeiter dient,
eine Windenvorrichtung (10), die den Windendraht (5) auf- und abwickeln kann, und
eine Beinunterstützungsvorrichtung (7), die sich von dem Körperteil (2) durch einen Bereich neben dem Arbeiter zur Vorderseite erstreckt und dazu ausgelegt ist, den Arbeiter bei einer Stehbewegung zu unterstützen, indem sie von der Vorderseite her eine Druckwirkung auf einen Oberschenkel des Arbeiters ausübt,
wobei ein Rückenflächenkontaktabschnitt (31) des Taillengurts (3), der die Rückenfläche des Arbeiters berührt, mit einem Positionierungsmechanismus versehen ist, der die Position vorgibt, an der der Taillengurt (3) geschlungen wird,
wobei der Positionierungsmechanismus ein vertiefter Abschnitt (31c) ist, der in einer Gurtdickenrichtung vertieft ist, die von einem Zwischenabschnitt bis zu einem unteren Endabschnitt in einer vertikalen Richtung des Rückenflächenkontaktabschnitts (31) gebildet ist.

2. Unterstützungsanzug nach Anspruch 1,
wobei zwischen dem vertieften Abschnitt (31c) im Rückflächenkontaktabschnitt (31) und einem Abschnitt (31a) auf einer oberen Seite relativ zu dem vertieften Abschnitt ein abgestufter Abschnitt (31b) gebildet ist.

3. Unterstützungsanzug nach Anspruch 2,
wobei die Beinunterstützungsvorrichtung (7) einen Betätigungsarm (73), der von dem Körperteil (2) in einem Zustand gestützt wird, in dem er in vertikaler Richtung schwenken kann, und ein Beinhalteteil (74), das von dem Betätigungsarm (73) gestützt wird und an einem Oberschenkel des Arbeiters angebracht wird, aufweist und so ausgelegt ist, dass durch Veranlassen des Schwenkens des Betätigungsarms (73) in der vertikalen Richtung die Beinunterstützungsvorrichtung (7) über das Beinhalteteil (74) auf den Oberschenkel des Arbeiters einwirkt, und
in einem Zustand, in dem das Körperteil (2) und das Beinhalteteil (74) an dem Arbeiter angebracht worden sind, eine Schwenkachse (P) des Betätigungsarms (73) auf der gleichen Höhe wie der abgestufte Abschnitt (31b) oder tiefer als der abgestufte Abschnitt positioniert (31b) ist.

4. Unterstützungsanzug nach Anspruch 3, wobei in einem Zustand, in dem das Körperteil (2) und das Beinhalteteil (74) an dem Arbeiter angebracht worden sind, die Schwenkachse (P) höher positioniert ist als ein unterer Endabschnitt des Taillengurts (3).

5. Unterstützungsanzug nach einem der Ansprüche 1 bis 4, wobei der Positionierungsmechanismus so ausgebildet ist, dass er sich über das linke und das rechte Ende des Rückenflächenkontaktabschnitts (31) erstreckt.

6. Unterstützungsanzug nach einem der Ansprüche 1 bis 5, umfassend:
ein Links/Rechts-Paar von Schultergurten (8), die über beiden Schultern des Arbeiters eingehängt sind,
wobei obere Endabschnitte (8a) des Links/Rechts-Paares von Schultergurten (8) durch einen oberen Abschnitt des Körperteils (2) gestützt werden,
untere Endabschnitte (8b) des Links/Rechts-Paares von Schultergurten (8) durch einen unteren Abschnitt des Körperteils (2) gestützt werden, und
ein Abstand zwischen den oberen Endabschnitten (8a) im Links/Rechts-Paar von Schultergurten (8) schmaler ist als ein Abstand zwischen den unteren Endabschnitten (8b) im Links/Rechts-Paar von Schultergurten (8).

7. Unterstützungsanzug nach Anspruch 6,
wobei die oberen Endabschnitte (8a) des Links/Rechts-Paares von Schultergurten (8) durch einen Mittelabschnitt in einer Links-Rechts-Richtung des Körperteils (2) gestützt werden, und
die unteren Endabschnitte (8b) des Links/Rechts-Paares von Schultergurten (8) durch einen linken und einen rechten Endabschnitt des Körperteils (2) gestützt werden.

## Revendications

1. Vêtement d'assistance (1) comprenant :
une partie de corps (2) destinée à s'adapter au dos d'un travailleur ;
une ceinture (3) qui s'étend à partir de la partie de corps (2) et destinée à être enroulée autour de la taille du travailleur pour adapter la partie de corps (2) au travailleur ;
une partie de bras (4) qui s'étend vers un côté avant à partir de la partie de corps (2) via une zone au-dessus du travailleur ;
une partie de main (6) suspendue à une partie d'extrémité de pointe de la partie de bras (4) par le biais d'un fil de treuil (5) et servant de poignée pour le travailleur dans un état dans lequel la partie de main (6) a été fixée à un objet à lever ;
un dispositif de treuil (10) pouvant enrouler et dérouler le fil de treuil (5) ; et
un dispositif d'assistance de jambe (7) qui s'étend vers le côté avant à partir de la partie de corps (2) via une zone à côté du travailleur, et est configuré pour assister le travailleur dans un mouvement debout en exerçant une action de poussée sur une cuisse du travailleur depuis le côté avant ;
dans lequel une partie de contact de surface arrière (31) de la ceinture (3) qui est en contact avec la surface dorsale du travailleur est prévue avec un mécanisme de positionnement qui prescrit la position où la ceinture (3) est enroulée, et
dans lequel le mécanisme de positionnement est une partie en retrait (31c) qui est en retrait dans une direction d'épaisseur de ceinture formée d'une partie intermédiaire à une partie d'extrémité inférieure dans une direction verticale de la partie de contact de surface dorsale (31).

2. Vêtement d'assistance selon la revendication 1,
dans lequel une partie étagée (31b) est formée entre la partie en retrait (31c) dans la partie de contact de surface dorsale (31) et une partie (31a) sur un côté supérieur par rapport à la partie en retrait.

3. Vêtement d'assistance selon la revendication 2,
dans lequel le dispositif d'assistance de jambe (7) a un bras de fonctionnement (73) supporté par la partie de corps (2) dans un état capable d'osciller dans la direction verticale, et une partie de maintien de jambe (74) supportée par le bras de fonctionnement (73) et destinée à s'adapter sur une cuisse du travailleur, et est configuré de sorte qu'en amenant le bras de fonctionnement (73) à osciller dans la direction verticale, le dispositif d'assistance de jambe (7) agit sur la cuisse du travailleur par le biais de la partie de maintien de jambe (74), et
dans un état dans lequel la partie de corps (2) et la partie de maintien de jambe (74) ont été adaptées sur le travailleur, un axe de pivot (P) du bras de fonctionnement (73) est positionné à la même hauteur que la partie étagée (31b) ou plus bas que la partie étagée (31b).

4. Vêtement d'assistance selon la revendication 3, dans lequel, dans un état dans lequel la partie de corps (2) et la partie de maintien de jambe (74) ont été adaptées sur le travailleur, l'axe de pivot (P) est positionné plus haut qu'une partie d'extrémité inférieure de la ceinture (3).

5. Vêtement d'assistance selon l'une quelconque des revendications 1 à 4, dans lequel le mécanisme de positionnement est formé en couvrant les extrémités gauche et droite de la partie de contact de surface dorsale (31).

6. Vêtement d'assistance selon l'une quelconque des revendications 1 à 5, comprenant :
une paire gauche-droite de bretelles (8) accrochées sur les deux épaules du travailleur ;
dans lequel des parties d'extrémité latérales supérieures (8a) de la paire gauche-droite de bretelles (8) sont supportées par une partie latérale supérieure de la partie de corps (2),
des parties d'extrémité latérales inférieures (8b) de la paire gauche-droite de bretelles (8) sont supportées par une partie latérale inférieure de la partie de corps (2), et
un intervalle entre les parties d'extrémité latérales supérieures (8a) dans la paire gauche-droite de bretelles (8) est plus étroit qu'un intervalle entre les parties d'extrémité latérales inférieures (8b) dans la paire gauche-droite de bretelles (8).

7. Vêtement d'assistance selon la revendication 6,
dans lequel les parties d'extrémité latérales supérieures (8a) de la paire gauche-droite de bretelles (8) sont supportées par une partie centrale dans une direction gauche-droite de la partie de corps (2), et
les parties d'extrémité latérales inférieures (8b) de la paire gauche-droite de bretelles (8) sont supportées par les parties d'extrémité gauche et droite de la partie de corps (2).
